Europäisches Patentamt

European Patent Office

Office européen des brevets

(11) Veröffentlichungsnummer: **0 262 089**
**A2**

## (12) EUROPÄISCHE PATENTANMELDUNG

(21) Anmeldenummer: **87810519.6**

(51) Int. Cl.⁴: **G 01 B 11/24**

(22) Anmeldetag: **09.09.87**

(30) Priorität: **23.09.86 CH 3804/86**

(43) Veröffentlichungstag der Anmeldung:
**30.03.88 Patentblatt 88/13**

(84) Benannte Vertragsstaaten: **DE FR GB IT SE**

(71) Anmelder: **KERN & CO. AG Werke für
Präzisionsmechanik Optik und Elektronik
CH-5001 Aarau (CH)**

(72) Erfinder: **Zumbrunn, Roland
Oberdorfstrasse 22a
CH-4443 Wittinsburg (CH)**

(74) Vertreter: **Seeger, Jan
c/o Kern & Co. AG
CH-5001 Aarau (CH)**

(54) **Vorrichtung zur Vermessung der Oberfläche eines Objektes.**

(57) Zur Abtastung einer Objektoberfläche (1) wird ein Moiré-Streifenmuster durch Kombination zweier Strichgitter erzeugt, und an der Objektoberfläche (1) deformierte Streifenbilder werden mit einer Fernsehkamera (4) aufgenommen und mit einer elektronischen Schaltung (16) ausgewertet. Eine dabei erforderliche Bewegung des Streifenmusters wird in einfacher Weise durch eine Verschiebung der Strichgitter zueinander erzeugt, und die Periode des Streifenmusters ist durch den Neigungswinkel der Strichteilungen der Strichgitter zueinander einstellbar.

Fig. 1

EP 0 262 089 A2

**Beschreibung**

## VORRICHTUNG ZUR VERMESSUNG DER OBERFLÄCHE EINES OBJEKTES

Die Erfindung betrifft eine Vorrichtung zur Vermessung der Oberfläche eines Objektes mit
- Mitteln zur Beleuchtung des Objektes mit einem Lichtbündel mit über dessen Querschnitt periodisch variierender Helligkeitsverteilung;
- Mitteln zur Modulation der Phase der Helligkeitsverteilung des Lichtbündels zur Beleuchtung;
- einer lichtelektrischen Detektoranordnung zur Aufnahme von deformierten Gitterbildern des Objektes für eine Anzahl unterschiedlicher Modulationsphasen des Lichtbündels zur Beleuchtung und mit
- Mitteln zur Verknüpfung der Helligkeitswerte an den, den jeweiligen Objektpunkten entsprechenden Einzeldetektoren der Detektoranordnung zur Berechnung der Höhe der Punkte der Objektoberfläche bezüglich einer Referenzebene.

Verfahren und Vorrichtungen zur kontaktlosen Vermessung von Oberflächenprofilen von Objekten sind bekannt. Dabei wird ein periodisches Streifenmuster auf die zu vermessende Oberfläche projiziert, und ein durch die Form der Oberfläche deformiertes Streifenbild wird ausgewertet, um die Höhen der einzelnen Punkte der Objektoberfläche gegenüber einer Referenzebene zu berechnen. Zur Erzeugung des Streifenmusters sind verschiedene Methoden bekannt. Gemäss C.L. Koliopoulos: Interferometric Optical Phase Measurement Techniques (Dissertation, Univ. of Arizona, 1981) werden die Streifenmuster mit einem Mirau-Interferometer oder mit einem Twyman-Green Interferometer erzeugt. Die Streifenbreite oder die Periodenlänge des Streifenmusters ist hierbei im Wesentlichen durch die Wellenlänge des zur Beleuchtung verwendeten Lichtes bestimmt. Gemäss EP-A-182 469 (M. Halioua, V. Srinivasan, 1986) werden die Streifenmuster mit einem Shearing-Interferometer oder durch Projektion eines Sinusgitters erzeugt. Die Periodenlänge kann dabei durch Einstellung des Scherwinkels oder durch Wahl eines entsprechenden Sinusgitters bestimmt werden. Die Periodenlänge des Streifenmusters bestimmt im Wesentlichen die Tiefenauflösung der Oberflächenmessung.

Aufgabe der Erfindung ist es, eine Vorrichtung zur Vermessung der Oberfläche eines Objektes anzugeben, die eine verbesserte Erzeugung und Auswertung des Streifenmusters erlaubt.

Diese Aufgabe wird gelöst durch die Kennzeichen der Patentansprüche 1 und 4. Vorteilhafte Ausführungsformen der Vorrichtung sind in den Patentansprüchen 2, 3 und 5 gekennzeichnet.

Die Erfindung wird nachfolgend anhand eines in den Zeichnungen schematisch dargestellten Ausführungsbeispieles näher erklärt. Es zeigen

Fig. 1 das Gesamtschema einer Anordnung zur Vermessung der Oberfläche eines Objektes,

Fig. 2 die Anordnung der Projektors gem. Fig. 1 im einzelnen und

Fig. 3 die Anordnung zweier Strichgitter gem. Fig. 2 im einzelnen.

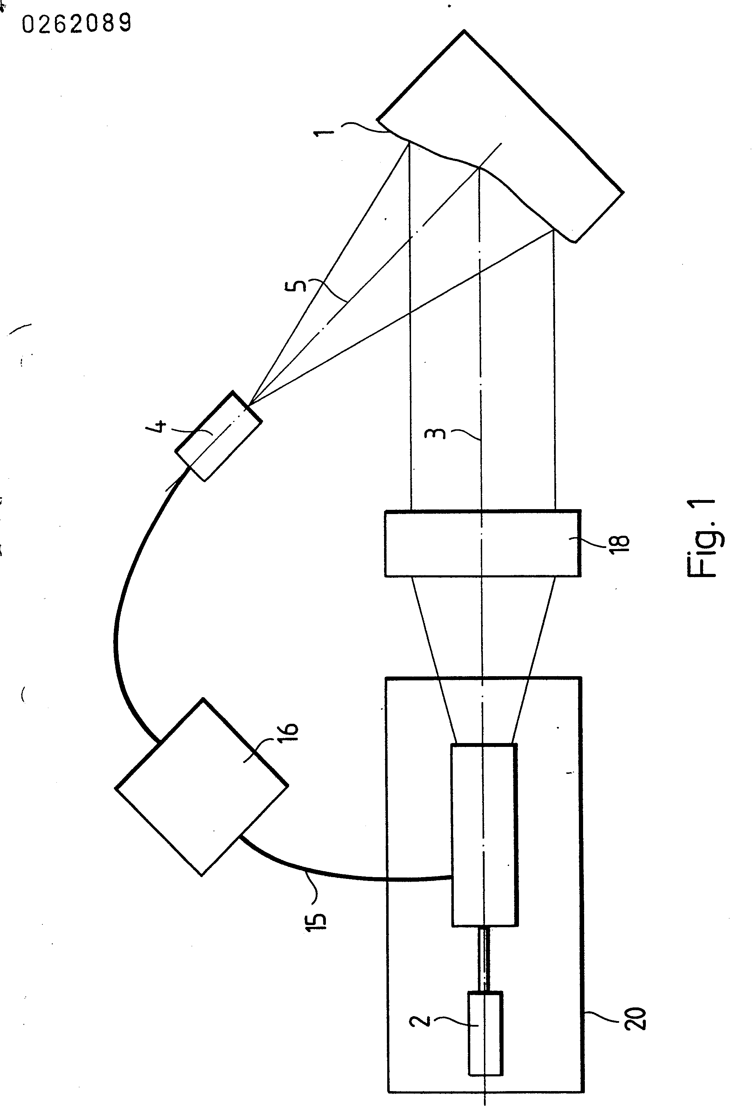

Wie in Fig. 1 dargestellt, wird die Oberfläche 1 eines Objektes durch das Licht eines Projektors 20 mit der optischen Achse 3 beleuchtet und von einer lichtelektrischen Detektoranordnung mit der optischen Achse 5, welche sich in einer Fernsehkamera 4 befindet, aufgenommen.

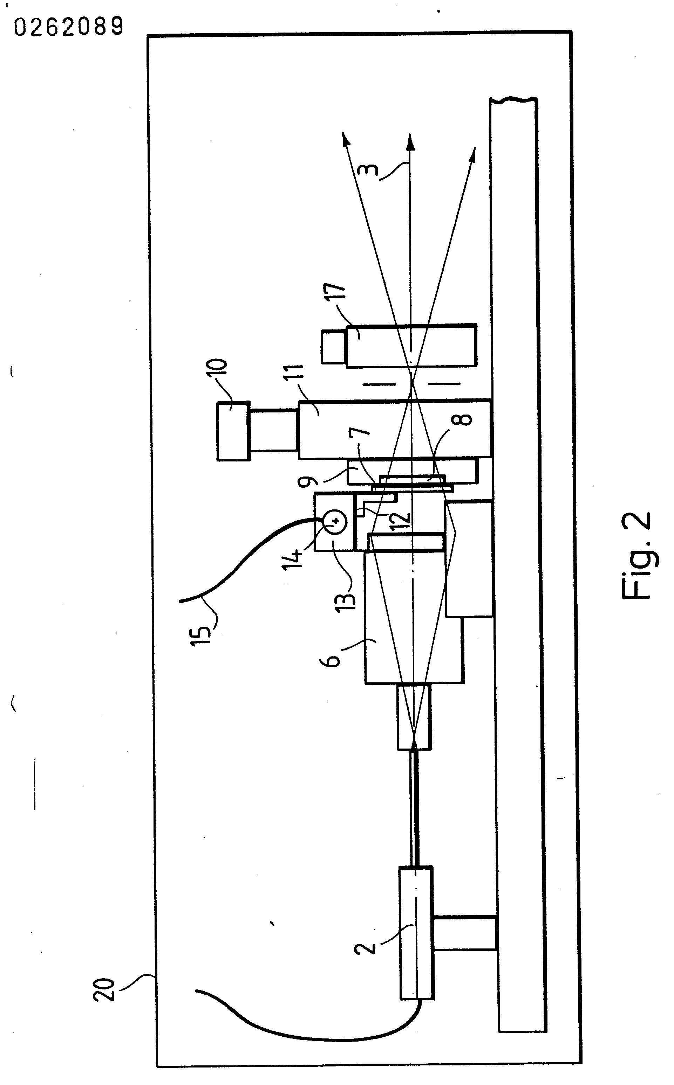

Wie Fig. 2 zeigt, wird das Lichtbündel eines Lasers 2 im Projektor 20 zunächst durch ein Objektiv 6 aufgeweitet. Dieses Lichtbündel beleuchtet dann zwei mit ihren Teilungen dicht benachbarte optische Strichgitter 7 und 8. Die Teilungen dieser beiden Ronchi-Gitter 7, 8 bestehen aus gleichbreiten geradlinigen Strichen und Lücken mit einer Periodenlänge von 50 um auf je einem Glasträger. Der Glasträger des Gitters 8 ist in einer um die optische Achse 3 drehbaren Fassung 9 montiert, welche durch ein von Hand am Knopf 10 zu betätigendes Mikrometergetriebe 11 um messbare Winkelbeträge gegenüber dem Gitter 7 drehbar ist.

Das Gitter 7 ist über einen Befestigungswinkel 12 in einer Parallelführung 13 verschieblich. Die Verschiebung um messbare Beträge erfolgt über einen Schrittmotor 14, der über ein Kabel 15 von einer Steuer- und Auswerteelektronik 16 (Fig. 1) angetrieben wird. Die Glasträger der Gitter 7, 8 gleiten bei ihrer Relativbewegung gegeneinander und sind zweckmässig durch einen Oelfilm voneinander getrennt. Nach Durchlaufen der Gitter 7, 8 hat des Lichtbündel des Lasers 2 eine über dessen Querschnitt periodisch variierende Helligkeitsverteilung, wie weiter unten im einzelnen ausgeführt wird. Dieses Lichtbündel wird durch zwei Optiken 17, 18 auf einen dem Objekt 1 entsprechenden Querschnitt aufgeweitet.

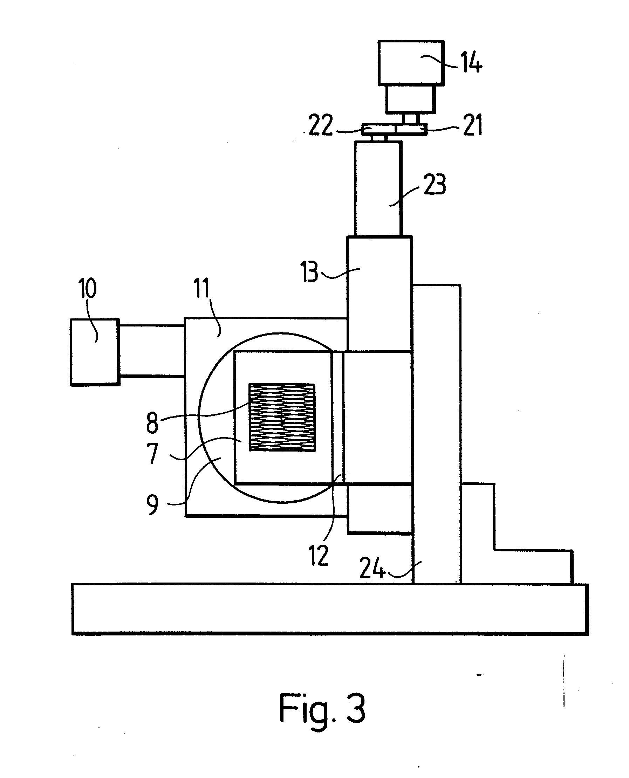

Die Anordnung der Strichgitter 7, 8 zeigt schematisch die Ansicht gem. Fig. 3, in der bereits zu Fig. 2 beschriebene Elemente die gleichen Bezugszeichen tragen, wie in Fig. 2. Zur Vereinfachung der Darstellung ist die Parallelführung 13 für das Gitter 7 in Richtung der optischen Achse 3 des Lasers 2 gesehen in Fig. 2 links vom Gitter 7 angeordnet, in Fig. 3 hingegen rechts. Die Teilstriche der Gitter 7, 8 können mit dem Mikrometergetriebe 11 waagrecht und zueinander parallel orientiert werden. Die aus dem Zusammenwirken der beiden Gitter 7, 8 entstehende Moiréfigur zeigt in diesem Fall in an sich bekannter Weise eine über den ganzen Lichtbündel-Querschnitt homogene Helligkeit, welche durch eine Höhenverschiebung des Gitters 7 in der Führung 13 veränderlich ist.

Aendert man die Orientierung des Gitters am Mikrometergetriebe 11, so werden im Bündelquerschnitt senkrechte Moiréstreifen sichtbar, deren Streifenperiode mit zunehmendem Winkel zwischen den Gitterteilungsrichtungen immer kleiner wird und am Knopf 10 von Hand wählbar ist. Die Objektoberfläche 1 wird dann mit einem periodischen Streifenmuster beleuchtet, welches durch Höhenverschiebung des Gitters 7 nach rechts oder links verschieblich ist. Diese Höhenverschiebung erfolgt mittels des Schrittmotors 14 über zwei Ritzel 21, 22 und ein Mikrometergetriebe 23 an der Parallelführung 13. Dabei ändert sich für alle Objektpunkte die Beleuchtungsphase periodisch, es liegt eine Phasenmodulation vor. Sieht man auf dem einen Strichgitter, z.B. Gitter 7, eine Referenzmarke und eine bezüglich des Geräterahmens 24 fest einstellbare zugehörige Abtastvorrichtung vor, welche in Fig. 3 nicht mit dargestellt sind, so kann man ein Referenzsignal erzeugen, wenn bestimmte Objektpunkte bestimmte Beleuchtungsphasen durchlaufen.

Die Auswertung der an der Objektoberfläche 1 deformierten Gitterbilder, die mit der Fernsehkamera 4 aufgenommen und in der Auswerteelektronik 16 gespeichert werden, geschieht in an sich bekannter Weise, vgl. die eingangs genannte Literaturstelle von C.L. Koliopoulos (1981) und wird hier nur kurz zusammengefasst. Diese Auswertung erfolgt gemäss einem vorbestimmten Zeitablauf, der durch die Aufnahmenorm der Fernsehkamera 4 gegeben ist. Der Schrittmotor 14 wird durch diesen Zeitablauf so gesteuert, dass in 800 ms durch 240 Motorschritte das Streifenbild auf dem Objekt 1 um 1/1 Moiréperiode verschoben wird. Die Fernsehkamera 4 umfasst einen CCD-Sensor mit 65'536 Einzelsensoren. Diese Einzelsensoren integrieren während der Bildverschiebung die einzelnen Bildpunktbeleuchtungen während je 33 1/3 ms und lesen dann je ein Gesamtbild in einen Speicher der Elektronik 16 aus. Während der genannten 800 ms werden also 24 Gesamtbilder ausgelesen. Dabei werden je 6 Bilder zu einer Bildsumme zusammengefasst, sodass sich 4 Bildsummen A, B, C, D ergeben. Diese Bildsummen werden nach einer Analog-Digital-Wandlung in zwei 65'536-fach Speicher M1, M2 wie folgt aufsummiert:

Bild 1 bis Bild 6 in 200 ms in M2 aufsummiert, ergeben Bildsumme A, danach

Bild 7 bis Bild 12 in 200 ms in M1 aufsummiert, ergeben Bildsumme (+B), danach

Bild 13 bis Bild 18 in 200 ms von M2 subtrahiert, ergeben Bildsumme A - C, danach

Bild 19 bis Bild 24 in 200 ms von M1 subtrahiert, ergeben Bildsumme B - D.

Dividiert man für alle 65'536 Bildpunkte die Speicherwerte

$$\frac{M1}{M2} = \frac{B - D}{A - C},$$

so erhält man 65'536 Werte, aus denen die Objektpunkthöhen berechnet werden. Dies kann im Falle einer sinusförmigen Helligkeitsverteilung der projizierten Moiréstreifen durch Bildung der Funktion arc tan, sonst mittels einer entsprechenden gespeicherten Wertetafel erfolgen.

Gegenüber bekannten Vorrichtung zur Vermessung von Objektoberflächen hat die hier beschriebene folgende Vorteile: Streifenbreite und Streifenphase können durch kleine und kontrollierte Gitterbewegungen genau und über einen grossen Bereich messbar verändert werden, und durch die Synchronisation des Schrittmotors mit dem Bildaufnahmezyklus erfolgen die Bildaufnahmen stets reproduzierbar genau an den vorgegebenen Streifenlagen des Moiréstreifenbildes.

Das beschriebene Ausführungsbeispiel erlaubt zahlreiche Varianten und Verwendungsformen. Durch gegengleiche Neigung der Strichgitter zueinander kann man bei Veränderung der Streifenbreite die Orientierung der Streifen auf dem Objekt konstant halten, und durch Anpassung der Streifenbreite an die Objekttiefe ist eine eindeutige Bestimmung der Höhen der Objektpunkte möglich.

## Patentansprüche

1. Vorrichtung zur Vermessung der Oberfläche (1) eines Objektes mit
- Mitteln (20) zur Beleuchtung des Objektes mit einem Lichtbündel mit über dessen Querschnitt periodisch variierender Helligkeitsverteilung;
- Mitteln (16, 20) zur Modulation der Phase der Helligkeitsverteilung des Lichtbündels zur Beleuchtung;
- einer lichtelektrischen Detektoranordnung (4) zur Aufnahme von deformierten Gitterbildern des Objektes für eine Anzahl unterschiedlicher Modulationsphasen des Lichtbündels zur Beleuchtung und mit
- Mitteln (16) zur Verknüpfung der Helligkeitswerte an den, den jeweiligen Objektpunkten entsprechenden Einzeldetektoren der Detektoranordnung zur Berechnung der Höhe der Punkte der Objektoberfläche bezüglich einer Referenzebene, dadurch gekennzeichnet, dass
- die Mittel zur Beleuchtung und zur Modulation zwei Strichgitter (7, 8) umfassen, welche derart im Lichtbündel angeordnet sind, dass sich auf der Objektoberfläche (1) ein periodisches Streifenmuster ergibt und dass
- Mittel (13, 14, 21, 22, 23) zur messbaren linearen Verschiebung eines der Strichgitter (7) in seiner Ebene gegenüber dem anderen Strichgitter (8) vorgesehen sind derart, dass die Phase des Streifenmusters um messbare Beträge veränderbar ist.

2. Vorrichtung nach Anspruch 1, dadurch gekennzeichnet, dass die Detektoranordnung (4) Mittel zur Ausgabe der den jeweiligen Objektpunkten, bzw. Bildern entsprechenden elektrischen Helligkeitssignale gemäss einem vorbestimmten Zeitablauf umfasst und dass die Mittel zur messbaren linearen Verschiebung einen Schrittmotor (14) nebst Steuerelektronik (16) umfassen, welche den Schrittmotor (14) synchron zum vorbestimmten Zeitablauf derart steuert, dass jedes in Form von elektrischen Signalen ausgegebene Bild aus einer vorgebenen Anzahl von Einzelbildern mit vorgegebenen Phasen des Streifenmusters entsteht.

3. Vorrichtung nach Anspruch 2, dadurch gekennzeichnet, dass das eine Strichgitter mindestens eine Referenzmarke aufweist und dass eine mit dem anderen Strichgitter einstellbar aber fest verbundene Abtastvorrichtung für die Referenzmarke vorgesehen ist derart, dass bestimmte Phasenlagen des Streifenmusters gegenüber dem Objekt durch entsprechende Referenzsignale gekennzeichnet sind.

4. Vorrichtung zur Vermessung der Oberfläche eines Objektes mit
- Mitteln (20) zur Beleuchtung des Objektes mit einem Lichtbündel mit über dessen Querschnitt periodisch variierender Helligkeitsverteilung;
- Mitteln (16, 20) zur Modulation der Phase der Helligkeitsverteilung des Lichtbündels zur Beleuchtung;
- einer lichtelektrischen Detektoranordnung (4) zur Aufnahme von deformierten Gitterbildern des Objektes für eine Anzahl unterschiedlicher Modulationsphasen des Lichtbündels zur Beleuchtung, und mit
- Mitteln (16) zur Verknüpfung der Helligkeitswerte an den, den jeweiligen Objektpunkten entsprechenden Einzeldetektoren der Detektoranordnung zur Berechnung der Höhe der Punkte der Objektoberfläche bezüglich einer Referenzebene, dadurch gekennzeichnet, dass
- die Mittel zur Beleuchtung und zur Modulation zwei Strichgitter (7, 8) umfassen, welche derart im Lichtbündel angeordnet sind, dass sich auf der Objektoberfläche (1) ein periodisches Streifenmuster ergibt und dass
- Mittel (9, 10, 11) zur messbaren Drehung eines der Strichgitter (8) in seiner Ebene gegenüber dem anderen Strichgitter (7) vorgesehen sind derart, dass die Länge der Periode des Streifenmusters auf vorbestimmte Werte einstellbar ist.

5. Vorrichtung nach Anspruch 4, gekennzeichnet durch Mittel, welche die beiden Strichgitter derart gegengleich zueinander messbar drehen, dass bei der Einstellung der Periode des Streifenmusters dessen Orientierung gegenüber dem Objekt unverändert bleibt.

4

Fig. 1

Fig. 2

0262089

Fig. 3